# EUROPEAN PATENT SPECIFICATION

(11) **EP 4 559 620 B1**
(45) Date of publication and mention of the grant of the patent: **24.06.2026**
(21) Application number: 24213695.0
(22) Date of filing: 18.11.2024
(51) Int. Cl.: B23Q 39/04, B23Q 39/00

(54) **A NUMERICALLY CONTROLLED MULTI-SPINDLE LATHE WITH MULTIPLE ORIENTABLE SPINDLES**
NUMERISCH GESTEUERTE MEHRSPINDELDREHMASCHINE MIT MEHREREN AUSRICHTBAREN SPINDELN
TOUR MULTIBROCHES À COMMANDE NUMÉRIQUE AVEC PLUSIEURS BROCHES ORIENTABLES

(30) Priority: 24.11.2023 IT 202300025032
(43) Date of publication of application: 28.05.2025
(73) Proprietor: PAOLINO BACCI S.R.L., 56021 Cascina (PI) (IT)
(72) Inventor: BACCI, Giuseppe, 56025 Pontedera (Pi) (IT); BACCI, Paolo, 56025 Pontedera (Pi) (IT); BACCI, Nino, 56025 Pontedera (Pi) (IT)
(74) Representative: Mannucci, Michele

(56) References cited:
- EP-A1- 2 161 098
- EP-A1- 3 778 118
- EP-A1- 3 858 542
- EP-A1- 4 043 146

## Description

### TECHNICAL FIELD

The present invention relates to the field of numerically controlled machine tools. More in particular, the invention relates to the field of numerical control lathes. Embodiments described herein relate to multiple lathes, with a plurality of pairs of headstocks and tailstocks for the simultaneous machining of a plurality of identical pieces.

In some embodiments the lathe is specifically designed for machining pieces made of wood, light alloy, synthetic resin and the like.

### BACKGROUND ART

For the production of elongated pieces, such as components of furniture or other, in wood, plastic, light alloys or the like, the use of numerically controlled lathes and copy lathes is known. In particular, for the production of furniture components, such as chair and table legs, multi-spindle copy lathes are known, in which it is possible to simultaneously machine a plurality of pieces supported by a plurality of headstocks and tailstocks. The tools which machine the plurality of pieces in parallel are controlled by means of a template, which reproduces the shape of the piece to be produced.

EP3858542 and EP4043146 disclose a numerically controlled multi-spindle lathe.

EP2161098 discloses a multi-spindle milling machine.

EP2161098 discloses a machine tool with a head carrying two spindles, which simultaneously machine pieces supported on two piece-holder tables adapted to rotate around parallel axes.

The object of the present invention is to provide a numerically controlled multi-spindle lathe which allows greater flexibility in machining and which allows to execute a greater number of different machining operations on the pieces.

### SUMMARY

A numerically controlled multi-spindle lathe according to the invention is defined in claim 1. Embodiments and further advantageous features of the lathe according to the invention are defined in the dependent claims.

In general, a numerically controlled multi-spindle lathe is disclosed herein, comprising a load-bearing structure having a base, extending along a first translation axis. The lathe further comprises a plurality of headstock and tailstock pairs which are coaxial with each other and each defining a respective rotation axis of the workpieces. Advantageously, each headstock is motorized. Advantageously, it can be envisaged that the distance between the headstocks and the tailstocks is adjustable. In embodiments disclosed herein, the rotation axes defined by each headstock/tailstock pair preferably lie on a common lying plane, which can be a vertical plane, for example. The rotation axes are appropriately parallel to the first translation axis.

In embodiments disclosed herein, the lathe further comprises a first carriage guided along a first guide system, which can comprise guides integral with the base and extending in the direction of the first translation axis, which can be engaged by shoes integral with the first carriage. The first carriage is provided with a numerically controlled movement along the first translation axis.

The lathe can comprise a second carriage, supported by the first carriage and movable with a numerically controlled movement with respect to the first carriage. The relative movement of the second carriage with respect to the first carriage occurs appropriately in the direction of a second translation axis, orthogonal to the first translation axis and also orthogonal to the lying plane of the rotation axes of the workpieces.

The movement between the first carriage and the second carriage is enabled by a second guide system comprising guides and shoes.

In embodiments described herein, the second carriage extends over an upper face of the base. The first carriage can be positioned, at least in part, between the upper face of the base and the second carriage.

The lathe comprises a plurality of spindles with parallel axes, which can be aligned with each other in particular according to a direction orthogonal to the first translation axis and to the second translation axis.

The spindles are configured to engage and rotate tools configured to simultaneously machine pieces each mounted between a respective headstock/tailstock pair.

Advantageously, the spindles can be carried by a rotatable support provided with a rotational movement around a rotation axis parallel to the alignment direction of the spindles and orthogonal to the first translation axis and the second translation axis. In practical embodiments, the spindles and the rotatable support form a rigid unit, in the sense that the rotation of the rotatable support around the rotation axis causes all the spindles to rotate simultaneously around such an axis, and that the spindles are connected to each other to form a single unit, such that the spindles cannot rotate with respect to each other around the rotation axis of the rotatable support.

The rotation axis around which the rotatable support can rotate is appropriately a numerically controlled rotary axis.

According to embodiments described herein, the rotatable support is rotatably supported on a slide constrained to the second carriage and provided with a translation movement, with respect to the second carriage. The relative movement between the second carriage and the slide occurs along a third translation axis, preferably orthogonal to the first translation axis and the second translation axis and parallel to the rotation axis of the rotatable support. The slide and the second carriage can be connected to each other by means of a third guide system, comprising guides and shoes, along which the relative movement between the slide and the second carriage occurs. The guides of the third guide system can be integral with the second carriage and the shoes can be integral with the slide, or vice versa.

In embodiments, the first translation axis and the second translation axis are horizontal, and the third translation axis is vertical. The rotation axes of the headstocks and tailstocks are horizontal and can be superimposed on each other in a vertical direction, preferably coplanar on a vertical plane.

In the present description and in the appended claims, "vertical" means a direction parallel to the direction of the force of gravity, and "horizontal" means a direction orthogonal to the vertical direction. The "vertical" and "horizontal" orientations refer to the position of the lathe when it is in operation.

Further advantageous embodiments and possible features (combinable with one or more of the above-mentioned features) of the multi-spindle lathe according to the invention are defined in the appended claims and are described below with reference to the appended drawings.

### BRIEF DESCRIPTION OF THE DRAWINGS

The invention will be better understood by following the description and the attached drawings, which illustrate exemplary and non-limiting embodiments of the invention. More in particular, the drawings show in:
Fig.1 a front view, according to I-I of Fig.2, of a multi-spindle lathe in a first embodiment;
Fig.2 a section according to II-II of Fig. 1;
Fig.3 a back view according to III-III of Fig.2;
Fig.4 a plan view according to IV-IV of Fig.1;
Fig.5 a front view of a multi-spindle lathe in a second embodiment;
Fig.6 a section according to VI-VI of Fig.5;
Fig.7 a back view according to VII-VII of Fig.6;
Fig.8 a plan view according to VIII-VIII of Fig.5; and
Fig.9 a section similar to the section of Figs.2 and 6 of a further embodiment.

### DETAILED DESCRIPTION

In summary, a multi-spindle lathe is described herein, comprising a base along which a first carriage moves along a first numerically controlled translation axis. The first carriage carries a second carriage, which moves along a second numerically controlled translation axis, orthogonal to the first translation axis. The second carriage in turn carries a slide, on which a rotatable support is rotatably mounted. The latter carries a plurality of spindles. The rotatable support rotates around a numerically controlled rotary axis, parallel to a third numerically controlled translation axis, along which the slide moves with respect to the second carriage. The tools carried by the spindles supported by the rotatable support machine a plurality of pieces in parallel, brought into rotation by respective pairs of headstocks and tailstocks. The rotation axes of the pairs of headstocks/tailstocks are preferably coplanar and lie on a plane orthogonal to the second translation axis.

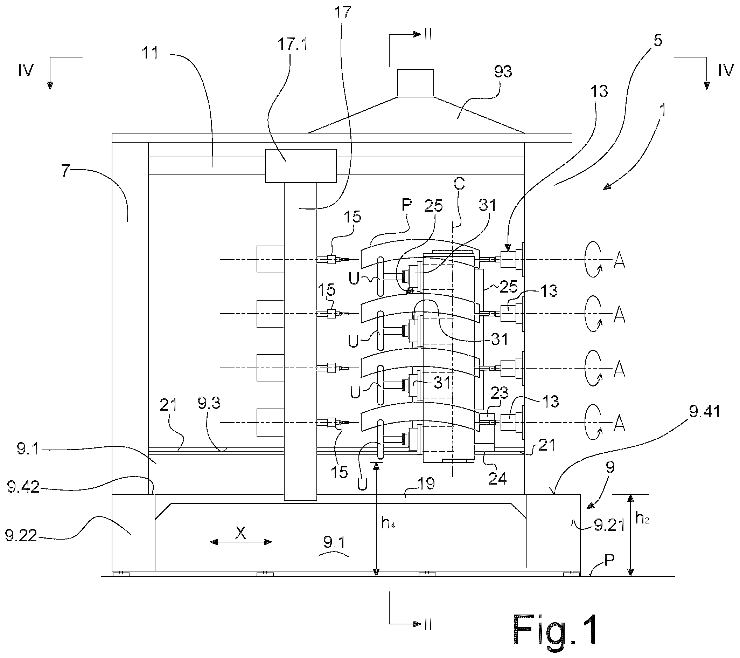

A first embodiment of a numerically controlled multi-spindle lathe according to the invention is illustrated in Figs. 1 to 4. The lathe is indicated with 1 and comprises a load-bearing structure 3.

In some embodiments, the load-bearing structure 3 comprises a first upright 5 and a second upright 7. The uprights 5,7 are vertical and rigidly connected to a lower base 9. At their top the uprights 5 and 7 are connected to one another by a horizontal cross member 11.

In some embodiments, the base 9 can comprise a main body 9.1 and two arms 9.21, 9.22 which are parallel to each other and extend transversely to a longitudinal development of the main body 9.1. The main body 9.1 and the arms 9.21, 9.22 have coplanar lower surfaces and form a surface for resting on the floor of the base 9. The upper surfaces or faces of the arms 9.21, 9.22 can be at a lower height than the upper surface or face of the main body 9.1 of the base 9, as described in more detail hereafter.

In some embodiments, the lower ends of the uprights 5 and 7 are fixed to corresponding distal ends of the arms 9.21, 9.22.

In the illustrated embodiment, the base 9 has an upper surface or face 9.3, consisting of the upper face of the main body 9.1 of the base 9. The arms 9.21, 9.22 have respective upper faces 9.41 and 9.42 which can be located at a height h2 from the floor P, lower than the height h1, at which the upper face 9.3 of the main body 9.1 of the base 9 is located. The height h1 is also the highest height reached by the base 9. In the illustrated embodiment, the lower ends of the uprights 5 and 7 are located at the height h2.

Headstocks 13 are carried on the upright 5. Each headstock is associated with a tailstock 15. Each headstock 13 and respective tailstock 15 are coaxial with each other. The rotation axes of the headstock and tailstock pairs are indicated with A, which define support and rotation members of workpieces P.

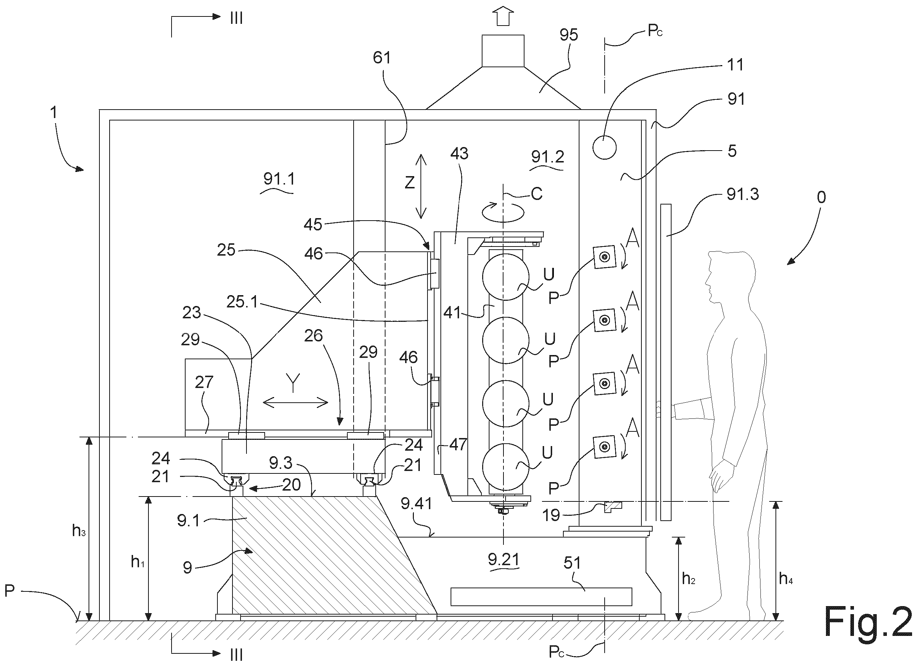

In the illustrated embodiment, the rotation axes A of the headstocks 13 and the tailstocks 15 lie on a common vertical plane of line Pc-Pc (Fig.2).

Each headstock 13 is rotated around the respective axis A by means of an electronically controlled motor, not shown. The motors of the headstocks 13 are preferably controlled so that all the headstocks 13 perform synchronous rotations, in the same direction or in opposite directions (clockwise and counter-clockwise). Thereby, a plurality of tools U carried by a tool-holder spindles 31 (described in more detail hereafter and indicated simply as "spindles") can synchronously and simultaneously machine all the pieces P supported and rotated by the pairs of headstocks and tailstocks 13, 15. In the illustrated embodiment, the tools U, and thus the spindles 31 carrying them, rotate around mutually parallel axes.

In illustrated embodiments, the spindles 31 are provided with a rotational movement around a vertical axis C, described hereafter, such that their rotation axes can be placed parallel to the rotation axes A of the headstocks 13 and tailstocks 15, or can be tilted at various angles in a horizontal plane. The rotation around the vertical rotary axis C can be restricted to an angle equal to or less than 270°, for example about 180-200°.

The rotation axes A of the pairs of headstocks 13 and tailstocks 15 are parallel to a first numerically controlled translation axis X, along which the tools U move. The rotation axes A of the pairs of headstocks 13 and tailstocks 15 are also orthogonal to a second numerically controlled translation axis Y, along which the tools U move. The axes X and Y are described in more detail hereafter.

The shape and arrangement of the spindles 31 with the respective tools U, and of the headstocks 13 and tailstocks 15 is such that the machining of the pieces P can occur with the rotation axes of the tools U and thus of the spindles 31 parallel to the rotation axes A of the headstocks 13 and of the tailstocks 15 and thus to the rotation axes of the workpieces P. In other words, the arrangement allows the pieces and the tools to cooperate with one another while the axes A are parallel to the rotation axes of the tools U and of the spindles 31 carrying them. However, the rotation around the axis C also allows the inclination of the rotation axes of the tools to be modified with respect to the rotation axes A of the workpieces P, thereby increasing the flexibility of the lathe 1 and allowing greater freedom in programming the work cycles and in the number of machining operations which can be carried out on the pieces P.

In the illustrated embodiment, the tailstocks 15 are supported by a load-bearing structure which allows the movement thereof in a direction parallel to the translation axis X to adjust the distance between the headstocks 13 and the tailstocks 15. In the embodiment described herein, the load-bearing structure comprises a movable upright 17 developing vertically. The movable upright 17 can be guided along an upper registration guide, or along a lower registration guide, or along two registration guides, respectively an upper guide and a lower guide.

In the illustrated embodiment, the movable upright 17 is guided along an upper registration guide, formed on or consisting of the crosspiece 11, and by a lower registration guide 19, which can preferably be integral with the base 9 and more precisely with the arms 9.21, 9.22. The lower registration guide 19 can be positioned at a height equal to or lower than the height at which the guide system 20 is located.

In the illustrated embodiment, the guides 11 and 19 are appropriately positioned so that their projection in plan is located between the arms 9.21 and 9.22 of the base 9.

In the illustrated embodiment, the movable upright 17 is integral with a slide 17.1 engaged with the guide constituted by the crosspiece 11, extending in the direction of the longitudinal development of the main body 9.1 of the base 9, i.e., parallel to the translation axis X. It is thereby possible to adapt the distance between all the headstocks 13 and the respective tailstocks 15 to the length of the workpieces P.

The possibility of arranging the headstocks 13 on a movable upright and the tailstocks 15 on a fixed upright is not excluded, although the illustrated arrangement is preferable because the movable members (tailstocks 17) are free of power supply cables. It is also possible to create configurations in which both the headstocks 13 and the tailstocks 15 are carried by uprights which are both movable with respect to the load-bearing structure 3.

Furthermore, the possibility of creating a simpler guide system for the movable upright 17 than that shown in the drawing, for example with a single guide, is not excluded. In such a case, the movable upright 17 can be guided only by an upper guide or only by a lower guide. In such a case the guide is configured so as to give sufficient stability to the upright, for example it can comprise two rails or two guide profiles spaced from each other orthogonally to the direction of movement (parallel to X) of the movable upright 17.

To move the spindles 31 in the directions of the two translation axes X and Y, which are orthogonal to each other and horizontal in the example, a system of carriages and guides is provided, as described hereafter.

In the illustrated embodiment, a first guide system 20 connects a first carriage or slide 23 to the base 9 and more precisely to the main body 9.1 of the base 9.

In the illustrated embodiment, the guide system 20 comprises a first pair of guides 21 and a set of shoes 24 slidably engaged with the guides 21. In the illustrated embodiment, the guides 21 are integral with the main body 9.1 of the base 9 and the shoes 24 are integral with the carriage 23. The guides 21 can be fixed to the upper face 9.3 of the base 9, more specifically to the main body 9.1 of the base 9. The guides 21 extend parallel to the axis X and thus parallel to the longitudinal development of the main body 9.1 of the base 9.

In embodiments, the guides 21 are spaced apart from each other in the direction of the second translation axis Y.

In the appended figures, the guides 21 (and other guides described hereafter) are made from two distinct and separate tracks or profiles, fixed to a common element, in the case of the guides 21 such a common element being constituted by the main body 9.1 of the base 9. In other embodiments, not shown, the guides can be made, for example, by means of a single component which has two opposite guide surfaces parallel to each other.

The first carriage 23 is provided with a numerically controlled movement in the direction of the first translation axis X. The movement can be imparted by a linear electric motor, or by a rotary electric motor which drives a threaded rod meshing with a nut screw integral with the first carriage 23, for example.

In some embodiments, the first carriage 23 has a flattened configuration and extends generally in a horizontal direction, parallel to the upper face 9.3 of the main body 9.1 of the base 9.

In some embodiments, the first carriage 23 carries a second carriage 25, which is movable along the second translation axis Y. The second translation axis Y is horizontal and orthogonal to the first translation axis X. In practice, the second carriage 25 is placed above the first carriage 23 and therefore the first carriage 23 is interposed between the main body 9.1 of the base 9 and the second carriage 25.

The second carriage 25 is preferably brought into a central position, i.e., symmetrical with respect to the first carriage 23. In practice, the first carriage 23 can have a vertical plane of symmetry MM and the second carriage 25 is placed in a centred position with respect to the plane of symmetry MM, so that such a plane is also the plane of symmetry of the second carriage 25. The plane of symmetry M-M is orthogonal to the first translation axis X and parallel to the second translation axis Y.

In embodiments, to allow movement along the second translation axis Y, the first carriage 23 and the second carriage 25 are connected to each other by a second guide system 26.

In some embodiments, the second guide system 26 comprises second guides 27 and respective shoes 29 slidably engaged with the second guides 27. For example, the second guides 27 can be integral with the second carriage 25 and the respective shoes 29 can be integral with the first carriage 23. A reverse arrangement is not excluded, although in this case less advantageous.

The spindles 31 are carried on the second carriage 25, on which the tools U can be engaged. In the embodiment of Figures 1 to 4, the number of spindles 31 and the number of tools U is equal to the number of pairs of headstocks 13 and tailstocks 15 (in the example four tools U and respective spindles), but this is not essential. For example, the number of spindles can be half the number of pairs of headstocks 13 and tailstocks 15. In such a case, a single tool works two pieces simultaneously in parallel. The spindles 31 can be rotated simultaneously by means of motors (not shown) in the same or different number with respect to the number of spindles 31. In the second case, appropriate multiple transmissions from a single motor to multiple spindles will be provided.

The spindles 31 are supported on the second carriage 25 in the manner described hereafter. Thanks to the movements on the translation axes X and Y of the carriages 23, 25, the tools U can perform numerically controlled movements along the numerically controlled translation axis X to machine every point of the workpieces P held between the headstocks 13 and the tailstocks 15. The numerically controlled movement along the translation axis Y allows the tools U to be approached and distanced with respect to the side surface to be turned of the pieces P held between headstocks 13 and tailstocks 15.

In the illustrated embodiment, the second carriage 25 is shaped as an upright, i.e., it extends vertically above the first carriage 23. In particular, advantageously, in the illustrated embodiment the second carriage 25 is positioned at a height h3 higher than the height h1, at which the upper face 9.3 of the main body 9.1 of the base 9 is located. The second carriage 25 extends upwards starting from the height h3.

In the illustrated embodiment, the second carriage 25 has a face 25.1 facing the rotation axes A of the workpieces P. More in particular, the face 25.1 faces a vertical plane on which the rotation axes A of the pairs of headstocks 13 and tailstocks 15 lie. More in particular, the face 25.1 of the second carriage 25 can generally extend parallel to the vertical lying plane of the rotation axes A of the workpieces P, i.e., the rotation axes of the headstocks 13 and tailstocks 15.

The tool-holder spindles 31 are carried, in the manner described hereafter, on the face 25.1 of the second carriage 25 and are therefore located in a space between the face 25.1 of the second carriage 25 and the rotation axes A of the workpieces.

In some embodiments, the spindles 31 are provided with a lifting and lowering movement along a third numerically controlled translation axis Z, orthogonal to the translation axes X and Y.

In some embodiments, the tools 31 are provided with a rotational movement around a numerically controlled rotary axis C, orthogonal to the translation axes X and Y.

In the illustrated embodiment, the spindles 31 are provided, with respect to the second carriage 25 carrying them, with both a translation movement in the vertical direction, along the third translation axis Z, and a rotational movement around a numerically controlled rotary axis C.

To achieve this double movement, in some embodiments, the spindles 31 are carried by a rotatable support 41 extending in a direction parallel to the third translation axis Z, and therefore orthogonally to the translation axes X, Y. Preferably, the spindles 31 are rigidly connected to the rotatable support 41, in the sense that the movement of the rotatable support 41 around the numerically controlled rotary axis C is simultaneously transmitted to all the spindles 31 and each spindle is brought to a fixed position on the rotatable support 41.

In embodiments described herein, the rotatable support 41 is in turn carried by a slide 43 extending in a vertical direction, parallel to the third translation axis Z. The slide 43 is constrained to the second carriage 25 and moves therewith along the first translation axis X and along the second translation axis Y.

In some embodiments, the slide 43 and the second carriage 25 are connected to each other by a third guide system 45 comprising guides and shoes. The third guide system 45 can comprise guides 47 integral with the slide 43, with shoes 46 engaged to which guides, the shoes being integral with the second carriage 25 and applied to the face 25.1 of the second carriage 25 facing the rotation axes A of the workpieces P. In practice, the slide 43, the tools 31 and the rotatable support 41 are arranged between the face 25.1 of the carriage 25 and the lying plane of the rotation axes A of the pieces P.

Advantageously, the slide 43 is mounted symmetrically with respect to the second carriage 25 and the rotatable support 41 is supported symmetrically with respect to the slide 43. In practice, the slide 43 and the related third guide system 45 which connects the slide 43 to the second carriage 25 are symmetrical with respect to a vertical median plane of symmetry M-M of the second carriage 25.

Advantageously, the rotation axis C, around which the support 41 rotates, lies on the plane of symmetry M-M of the slide 43. Thereby the entire system formed by the first carriage 23, the second carriage 25, the slide 43 and the support 41 is symmetrical with respect to the vertical median plane M-M.

In practice, the support 41 of the spindles 31 is mounted with a symmetrical arrangement with respect to the first carriage 23 and the second carriage 25, i.e., symmetrically with respect to the vertical median plane of symmetry M-M of the first carriage 23 and the second carriage 25.

This mechanical symmetry corresponds to a thermo-symmetry, i.e., a thermal symmetry. This means that the thermal expansions of the members carrying the spindles 31 (and thus the tools U) are symmetrical with respect to the median plane of symmetry M-M, so that the position of the tools U is invariant with respect to the temperature. Any thermal expansion of the guides, carriages, slide and rotatable support occurs symmetrically with respect to the median plane M-M and therefore does not affect the position of the spindles with respect to a reference system of the numerical control unit of the spindle movements.

As a result, the lathe 1 works with high precision without the need for thermostat control, unlike machine tools in which the tools are carried in a non-symmetrical manner with respect to the respective carriages and slides and in which, therefore, a thermal expansion of the mechanical members causes a movement of the tools with respect to a reference point.

When the lathe 1 is in working condition, the slide 43 and the support 41 are positioned so that they are always in an area defined between the main body 9.1 and the arms 9.21, 9.22 of the base 9. This area is practically free from the base and therefore allows the slide 43 and the support 41 to lower to machine pieces P which are brought by the headstocks 13 and tailstocks 15 to an ergonomic height with respect to the floor P, i.e., to a height which can be easily reached by an operator O without particular difficulty, as shown in Fig.1. The free space between the main body 9.1 and the arms 9.21, 9.22 of the base 9 can also be used for the wiring for powering the spindles 31, which wiring thereby does not interfere with the movement of the carriages 23, 25 and the slide 43.

In practice, thanks to the possibility of moving the slide 43 downwards until it projects below the maximum height h1 of the base 1, it is possible to arrange the highest of the headstock 13/tailstock 15 pairs at an ergonomic height, i.e., easily reachable by the operator to load the respective workpiece P, while simultaneously maintaining an centre distance between the rotation axes A which is sufficiently large to allow machining pieces P with large diameters and/or with large diameter tools.

In practice, therefore, the first guide system 20 is placed at a height h1 which is higher than the minimum height h4 which can be reached by the slide 43 (see Fig. 2), such a height h4 being the height which can be reached by the lower end of the slide 43 in the movement along the translation axis Z.

In advantageous embodiments, the lathe 1 can be provided with a chip removal conveyor. The conveyor, schematically indicated with 51 in Fig.2 and omitted for the sake of simplicity in the other figures, can be housed in the space between the main body 9.1 and the arms 9.21, 9.22 of the base 9. The conveyor 51 can be a belt conveyor. In other embodiments, the conveyor can be a suction conveyor. The use of a combined conveyor, i.e., provided with movable mechanical members and pneumatic systems, is not excluded.

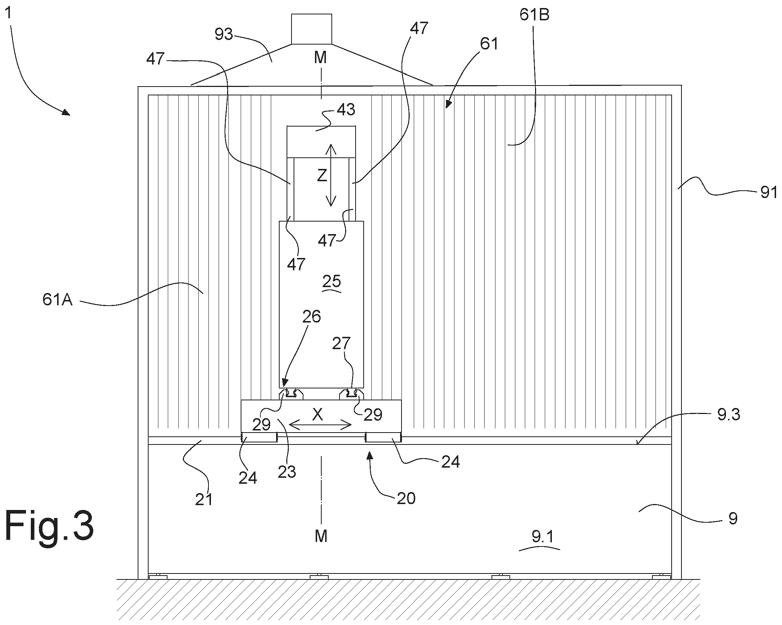

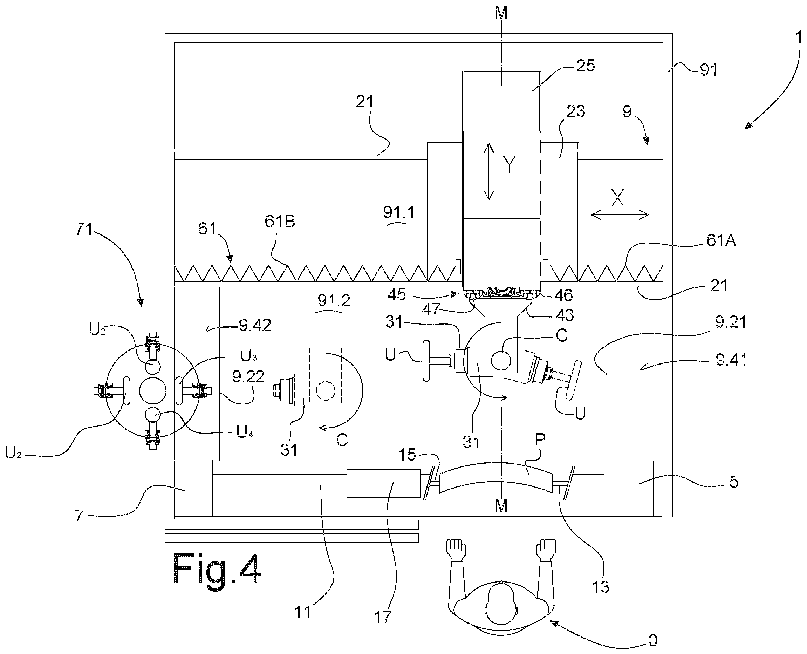

In some advantageous embodiments, to obtain regular and efficient operation of the numerically controlled multi-spindle lathe 1, a protective wall 61 is provided, preferably a flexible wall, e.g., a bellows wall, shown in particular in the back view of Fig.3 and in the plan view of Fig.4.

The wall 61 can be divided into two portions 61A and 61B, directly or indirectly constrained to the first carriage 23, so that the two wall portions 61A, 61B define a vertically developing slot for the passage of the second carriage 25 and in particular of the tools U carried by the spindles 31, and the approaching and distancing of the tools U with respect to the workpieces P carried by the pairs of headstocks 13 and tailstocks 15. The two wall portions 61A, 61B can for example be in the form of bellows. Alternatively, flexible walls can be used which wind and unwind on rollers with a vertical axis, or still walls formed by a plurality of sectors sliding with respect to one another so as to telescopically lengthen and shorten.

The flexible wall 61 separates the working area of the tools U with respect to the area in which the first carriage 23 moves. Thereby, the fall of machining chips on the guides 21 and partly on the guides 27 is avoided or reduced. The chips remain confined in the front area of the flexible wall 61 and are collected by the conveyor 51.

The flexible wall 61 can divide a booth 91, in which the lathe 1 is contained, into two volumes 91.1, 91.2. The first rear volume 91.1, which contains the main body 9.1 of the base 9, the guide system 20 (or part thereof), the first carriage 23, part of the second carriage 25 and part of the guide system 26. The second front volume 91.2 contains the work area, in which the headstocks 13 and the tailstocks 15 are located, as well as the slide 43 and the spindles 31.

During machining, chips and machining dust are formed in the second volume 91.2. To collect the dust generated by the process, it is sufficient to arrange a suction system, for example an extractor hood 93, in fluid connection with the second volume 91.2 to maintain the latter in a slight vacuum with respect to the outside of the booth and with respect to the first volume (91.1). Thereby, it is not necessary to keep the back volume 91.1 under vacuum. This allows to drastically reduce the energy consumption of the suction system.

In the illustrated embodiment, 91.3 indicates a movable openable wall, which allows the operator O access to the volume 91.2, where the workpieces P must be loaded and worked pieces unloaded.

In some embodiments the numerically controlled multi-spindle lathe 1 can comprise a tool magazine 71, schematically shown only in Fig.4 and omitted in Figs. 1 to 3 for the sake of simplicity. The tool-holder magazine 71 can comprise one or more sets of tools U1, U2, U3, U4, which can be alternatively fitted on the spindles 31. In practical embodiments, multiple sets of identical tools are provided, each set comprising a plurality of superimposed tools, in a number equal to the number of spindles 31 and placed at a distance equal to the distance of the axes A in the direction of the translation axis Z. In the illustrated embodiment, the tool-holder magazine 71 comprises four sets of tools U1, U2, U3, U4, each of which comprises four tools, one for each of the four spindles 31. Only one tool from each series is visible in Fig.4.

In some embodiments, the tool-holder magazine 71 is a magazine rotatable around a vertical axis, as shown in Fig.4. The possibility of making a tool-holder magazine in another shape, for example translating in the direction Y, is not excluded.

The rotational movement around the axis C of the rotatable support 41, on which the spindles 31 are mounted, allows the spindles 31 to be tilted during machining, in a position not parallel to the rotation axes A of the workpieces P. Furthermore, the rotation of the rotatable support 41 around the axis C also allows for easier replacement of the tools U with other tools carried by the tool-holder magazine 71, as is clear from the dotted line indicated with 31X of the spindles in position for taking tools from the tool-holder magazine 71 in Fig.4. The possibility of rotation around the rotary axis C allows a high flexibility in the configuration and arrangement of the tool-holder magazine 71. The possibility of orienting the spindles 31 around the C axis allows easily reaching the tools U1-U4 carried by the tool-holder magazine 71. The symmetrical configuration of the slide 43 and the support 41 also allows the magazine 71 to be arranged indifferently on one side or the other of the lathe 1, for example depending on the space available. The possibility of providing two tool-holder magazines, one on the left (on the side of the arm 9.22 of the base 9) and one on the right (on the side of the arm 9.21 of the base 9), is not excluded.

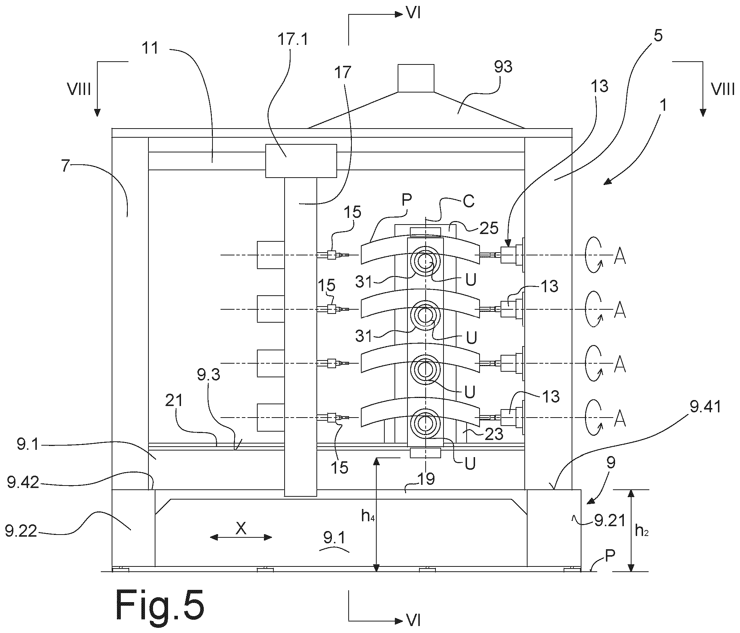

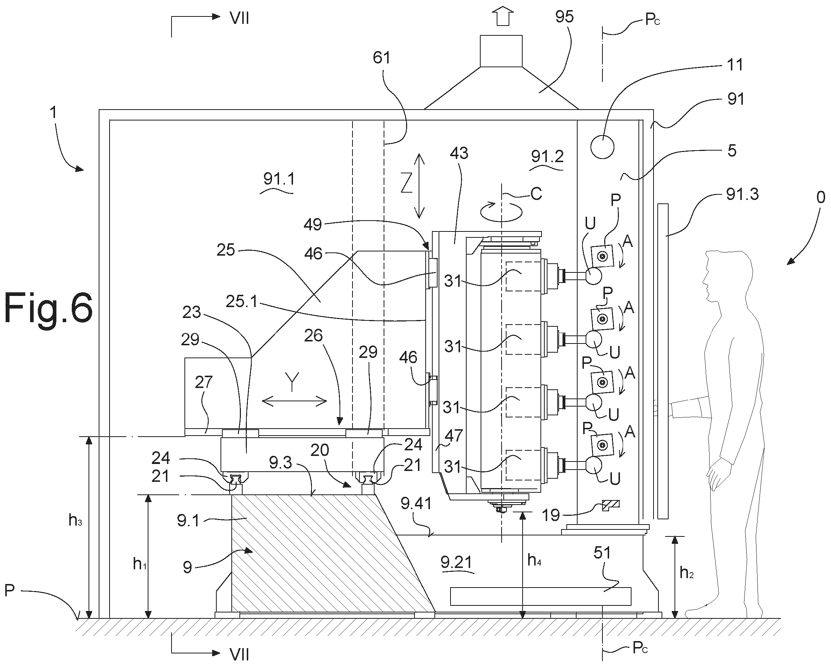

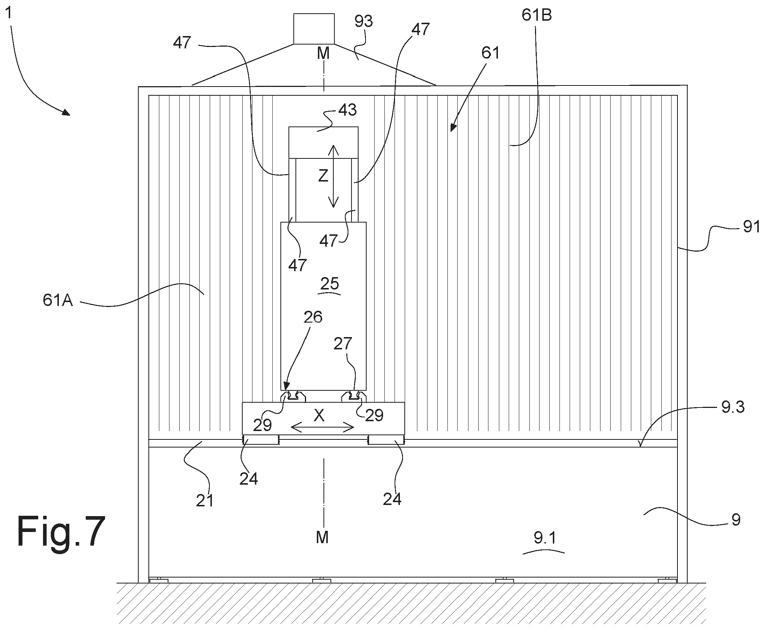

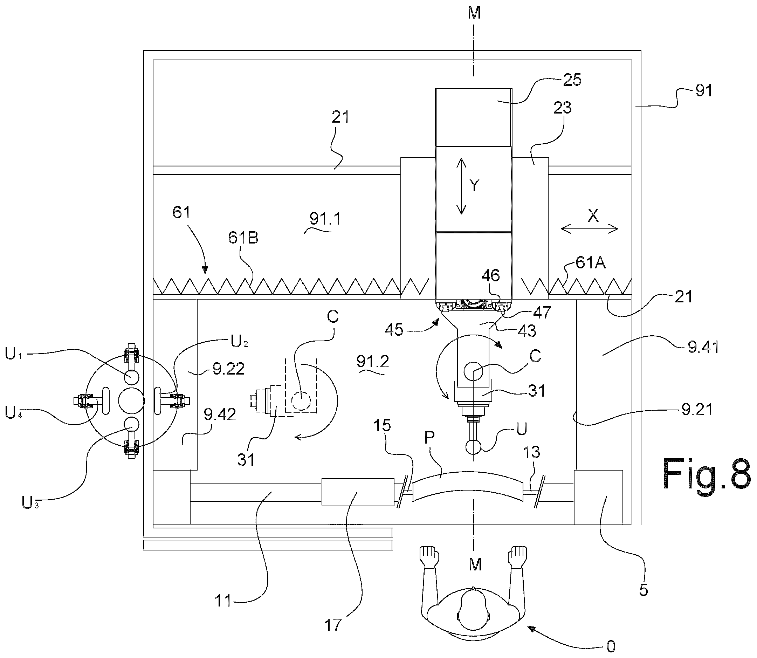

A second embodiment of a numerically controlled multi-spindle lathe 1 is illustrated in Figures 5 to 8. The lathe 1 of Figures 5 to 8 has a structure largely identical to that of the lathe 1 of Figures 1 to 4. Equal parts in the two embodiments are indicated with the same reference numbers and will not be described again.

The main difference between the embodiment of Figures1 to 4 and the embodiment of Figures 5 to 8 consists in that in the normal working position the spindles 31 of the numerically controlled multi-spindle lathe of Figures 5 to 8 are placed with the rotation axes parallel to the second translation axis Y, and therefore orthogonal to the rotation axes A of the workpieces P, rather than parallel to the axis X and the rotation axes A of the workpieces P, as instead envisaged in Figures 1 to 4.

In the embodiments described so far, the first carriage 23 and the second carriage 25 are superimposed on each other and positioned above the main body 9.1 of the base 9. The guide system 20 is interposed between the lower part of the first carriage 23 and the upper face 9.3 of the base 9. This configuration is particularly advantageous.

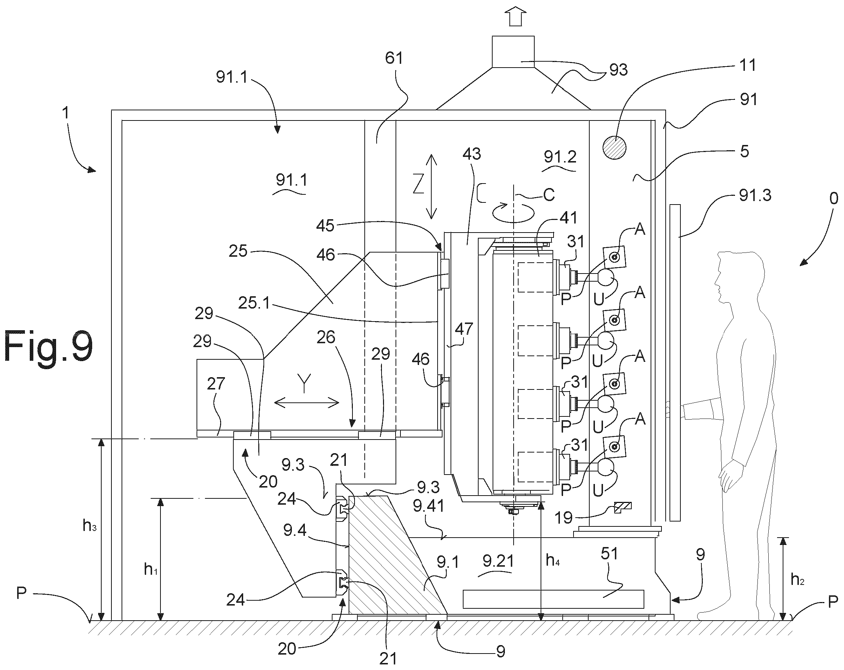

In other configurations, the structure of the carriages and the base can be different, as for example illustrated in the embodiment shown in Fig.9. This figure shows a section of a numerically controlled multi-spindle lathe 1 according to the present disclosure, in a section according to a vertical plane, orthogonal to the first translation axis X. Equal numbers indicate parts equal to or corresponding to those already described with reference to Figures 1 to 8. These parts will not be described again, except to the extent necessary to understand the differences between the embodiment of Fig. 9 and the embodiments of Figures 1 to 8.

In the embodiment of Fig.9 the spindles 31 and the tools U are made as in Figures 5 to 8, but in other embodiments, the spindles 31 and the tools U of the lathe according to Fig.9 can be configured as in Figures 1 to 4.

The multi-spindle lathe 1 of Fig. 9 differs from the multi-spindle lathes 1 of Figures 1 to 8 mainly because the guide system 20 is not arranged on the upper face 9.3 of the main body 9.1 of the base 9, but on a side face 9.4, opposite the area in which the headstocks 13 and tailstocks 15 are arranged.

The first carriage 23 has a lower portion projecting below the height h1 where the upper face 9.3 of the main body 9.1 of the base 1 is located. The shoes 24 of the guide system 20 are carried on such a lower portion, the shoes slidingly engaged on the guides 21. The latter are integral with the side surface or face 9.4, and are spaced apart from each other in the vertical direction parallel to the axis Z.

The second carriage 25 is placed at the height h3, above the first carriage 23, and more precisely above the shoes 29 of the second guide system 26.

## Claims

1. A numerical control multi-spindle lathe (1), comprising:
a load-bearing structure (3) having a base (9) extending according to a first translation axis (X);
a plurality of headstock (13) and tailstock (15) pairs coaxial with each other and each defining a respective rotation axis (A) of the workpieces (P); wherein each headstock (13) is motorized; wherein the distance between headstocks and tailstocks is adjustable; and wherein the rotation axes (A) lie on a common lying plane, and are parallel to the first translation axis (X);
a first carriage (23) guided along a first guide system (20) comprising guides (21) integral with the base (9) and extending in the direction of the first translation axis (X); wherein the first carriage (23) is provided with a numerically controlled movement along the first translation axis (X);
a second carriage (25), supported by the first carriage (23) and movable with a numerically controlled movement with respect to the first carriage (23), by means of a second guide system (26), in the direction of a second translation axis (Y), orthogonal to the first translation axis (X) and orthogonal to the lying plane of the rotation axes (A) of the workpieces; wherein the second carriage (25) extends above an upper face (9.3) of the base;
a plurality of spindles (31) with parallel axes, and aligned with each other in a direction orthogonal to the first translation axis (X) and to the second translation axis (Y); the spindles being adapted to rotate tools (U) configured to simultaneously machine pieces mounted between the headstocks (13) and the tailstocks (15);
wherein: the spindles (31) are carried by a rotatable support (41) provided with a rotational movement around a rotation axis (C) parallel to the direction of alignment of the spindles; the rotatable support (41) is rotatably supported on a slide (43) constrained to the second carriage (25) and provided with a translational movement, with respect to the second carriage (25), along a third translation axis (Z) orthogonal to the first translation axis (X) and to the second translation axis (Y) and parallel to the rotation axis (C) of the rotatable support.

2. The lathe (1) of claim 1, wherein the rotatable support (41), the slide (43) and the second carriage (25) are symmetrical with respect to a median plane (M-M) of the second carriage (25), the median plane (M-M) being parallel to the second translation axis (Y) and orthogonal to the first translation axis (X).

3. The lathe (1) of claim 1 or 2, wherein the second carriage (25) is positioned in a symmetrical position with respect to the first carriage (23).

4. The lathe (1) of one or more of the preceding claims, wherein the slide (43) is directly engaged to the second carriage (25) by means of a third guide system (45) interposed between the slide (43) and the second carriage (25).

5. The lathe (1) of one or more of the preceding claims, wherein the slide (43) is engaged to a face of the second carriage (25) facing the rotation axes (A) of the workpieces (P); wherein preferably the slide (43) is engaged with the face of the second carriage (25) in a substantially symmetrical position with respect to said face.

6. The lathe (1) of one or more of the preceding claims, wherein the guides (21) of the first guide system (20) are applied to the upper face (9.3) of the base (9) and are placed side by side with each other and spaced parallel to the second translation axis (Y); and wherein the second carriage (25) is superimposed on the first carriage (23), the first carriage (23) being positioned between the upper face (9.3) of the base and the second carriage (25).

7. The lathe (1) of one or more of claims 1 to 5, wherein the guides (21) of the first guide system (20) are applied on a side face (9.4) of the base (9), parallel to the first translation direction (X) and placed on the side of the base (9) opposite the headstocks (13) and tailstocks (15).

8. The lathe (1) of claim 6 or 7, wherein the first carriage (23) and the second carriage (25) are directly constrained to each other by means of the second guide system (26); wherein the second guide system (26) comprises guides (27) and shoes (29) slidably engaged with each other; and wherein the guides (27) of the second guide system (26) are integral with one of said first carriage (23) and second carriage (25), and the shoes (29) are integral with the other of said first carriage (23) and second carriage (25).

9. The lathe (1) of one or more of the preceding claims, wherein: the first translation axis (X) and the second translation axis (Y) are horizontal; the rotation axis (C) of the spindle support is vertical; the rotation axes (A) of the workpieces (P) are horizontal, and the lying plane of the rotation axes (A) of the workpieces is a vertical plane.

10. The lathe (1) of one or more of the preceding claims, wherein the second carriage (25) has the shape of a movable upright extending vertically above the first carriage (23).

11. The lathe (1) of one or more of the preceding claims, wherein the base (9) has a face along which the first carriage (23) and the second carriage (25) slide, positioned at a higher height (h1) with respect to a minimum height (h4) reachable from a lower end of the slide (43) in the movement along the third translation axis (Z).

12. The lathe (1) of one or more of the preceding claims, wherein the first guide system (20) is positioned at a height (h1) higher than a minimum height (h4) reachable from a lower end of the slide (43) in the movement along the third translation axis (Z).

13. The lathe (1) of one or more of the preceding claims, wherein the tailstocks (15) are supported by an upright (17) movable parallel to the first translation axis (X) to adjust the mutual distance between the headstocks (13) and the tailstocks (15), and wherein the headstocks (13) are supported by an upright (5) integral with the base (9), or vice versa; wherein motors for the rotation of the headstocks (13) are preferably supported by the fixed upright (5); wherein preferably the movable upright (17) is guided: on at least one lower guide (19) parallel to the first translation axis (X), or on at least one upper guide (11) parallel to the first translation axis (X), or on both an upper guide (11) parallel to the first axis (X) and a lower guide (19) parallel to the first translation axis (X); wherein preferably the lower guide (19) is placed at a lower height with respect to the upper face (9.3) of the base (9) on which the guides (21) of the first guide system (20) are placed; and wherein preferably the movable upright (17) and preferably the fixed upright (15) have lower ends placed at a lower height (h2) with respect to the upper face (9.3) of the base (9) on which the guides (21) of the first guide system (20) are placed.

14. The lathe (1) of claim 13, wherein:
the base (9) comprises: a main body (9.1) on which the guides (21) of the first guide system (20) are constrained; and a pair of transverse arms (9.21, 9.22), parallel to each other and orthogonal to the main body (9.1) and to the second translation axis (Y);
the fixed upright (5) is integral with one of said transverse arms (9.21, 9.22);
in a plan view at least one and preferably both said upper guide (11) and said lower guide (19) extend between the transverse arms (9.21, 9.22) of the base (9); and
wherein preferably a conveyor (51) for the removal of chips is housed between the two arms (9.21, 9.22), said conveyor preferably being a suction conveyor or a moving belt conveyor.

15. The lathe (1) of one or more of the preceding claims, comprising a tool-holder magazine (71).

16. The lathe of one or more of the preceding claims, comprising a flexible protective wall (61) which divides the interior of a booth (91) containing the lathe into a first volume (91.1) and a second volume (91.2); wherein the headstocks (13) and tailstocks (15) and the work area are located in the second volume (91.2) where the first carriage (23) is located; wherein the second carriage (25) passes through the flexible wall; and wherein preferably a suction system (93) is configured to create a vacuum in the second volume (91.2) with respect to the outside of the booth (91) and with respect to the first volume (91.1).

17. The lathe (1) of claim 16, wherein the protective wall (61) comprises a first wall portion (61A) and a second wall portion (61B), between which a passage for the tools (U) is defined, the first wall portion and the second wall portion being constrained to the first carriage (23) to allow a lengthening and shortening of one of said first wall portion and second wall portion and a simultaneous shortening and lengthening of the other of said first wall portion and second wall portion, when the first carriage (23) translates along the first translation axis (X); and wherein the second carriage is movable through an opening arranged between the first wall portion (61A) and the second wall portion (61B).

## Patentansprüche

1. Numerisch gesteuerte Mehrspindeldrehmaschine (1), umfassend:
eine Trägerstruktur (3) mit einer Basis (9), die sich entlang einer ersten Translationsachse (X) erstreckt;
eine Vielzahl von Spindelstock- (13) und Reitstock- (15) Paaren, die koaxial zueinander angeordnet sind und jeweils eine entsprechende Drehachse (A) der Werkstücke (P) definieren; wobei jeder Spindelstock (13) motorisiert ist; wobei der Abstand zwischen Spindelstock und Reitstock einstellbar ist; und wobei die Drehachsen (A) in einer gemeinsamen Ebene liegen und parallel zur ersten Translationsachse (X) verlaufen;
einen ersten Schlitten (23), der entlang eines ersten Führungssystems (20) geführt wird, das Führungen (21) umfasst, die fest mit der Basis (9) verbunden sind und sich in Richtung der ersten Translationsachse (X) erstrecken; wobei der erste Schlitten (23) in einer numerisch gesteuerten Bewegung entlang der ersten Translationsachse (X) verfahrbar ist;
einen zweiten Schlitten (25), der vom ersten Schlitten (23) getragen wird und in einer numerisch gesteuerten Bewegung in Bezug auf den ersten Schlitten (23) mittels eines zweiten Führungssystems (26) in Richtung einer zweiten Translationsachse (Y), orthogonal zur ersten Translationsachse (X) und orthogonal zur Liegeebene der Drehachsen (A) der Werkstücke verfahrbar ist; wobei sich der zweite Schlitten (25) über eine Oberseite (9.3) der Basis hinaus erstreckt;
eine Vielzahl von Spindeln (31) mit parallelen Achsen, die zueinander in einer Richtung orthogonal zur ersten Translationsachse (X) und zur zweiten Translationsachse (Y) ausgerichtet sind; wobei die Spindeln dazu ausgelegt sind, Werkzeuge (U) zu rotieren, die konfiguriert sind, zwischen den Spindelstöcken (13) und den Reitstöcken (15) montierte Werkstücke gleichzeitig zu bearbeiten;
wobei: die Spindeln (31) von einem drehbaren Träger (41) getragen werden, der um eine Drehachse (C) parallel zur Ausrichtungsrichtung der Spindeln drehbar ist; der drehbare Träger (41) ist drehbar auf einem Führungsschlitten (43) gelagert, der an dem zweiten Schlitten (25) befestigt ist und translatorisch in Bezug auf den zweiten Schlitten (25) entlang einer dritten Translationsachse (Z) verfahrbar ist, die orthogonal zur ersten Translationsachse (X) und zur zweiten Translationsachse (Y) sowie parallel zur Drehachse (C) des drehbaren Trägers.

2. Drehmaschine (1) nach Anspruch 1, wobei der drehbare Träger (41), der Führungsschlitten (43) und der zweite Schlitten (25) zu einer Medianebene (M-M) des zweiten Schlittens (25) symmetrisch angeordnet sind, wobei die Mittelebene (M-M) parallel zur zweiten Translationsachse (Y) und orthogonal zur ersten Translationsachse (X) verläuft.

3. Drehmaschine (1) nach Anspruch 1 oder 2, wobei der zweite Schlitten (25) in einer symmetrischen Position in Bezug auf den ersten Schlitten (23) angeordnet ist.

4. Drehmaschine (1) nach einem oder mehreren der vorstehenden Ansprüche, wobei der Führungsschlitten (43) mittels eines dritten Führungssystems (45), das zwischen dem Führungsschlitten (43) und dem zweiten Schlitten (25) angeordnet ist, direkt mit dem zweiten Schlitten (25) verbunden ist.

5. Drehmaschine (1) nach einem oder mehreren der vorstehenden Ansprüche, wobei der Führungsschlitten (43) mit einer Fläche des zweiten Schlittens (25) verbunden ist, die den Drehachsen (A) der Werkstücke (P) zugewandt ist; wobei der Führungsschlitten (43) vorzugsweise mit der Fläche des zweiten Schlittens (25) in einer im Wesentlichen symmetrischen Position in Bezug auf diese Fläche verbunden ist.

6. Drehmaschine (1) nach einem oder mehreren der vorstehenden Ansprüche, wobei die Führungen (21) des ersten Führungssystems (20) an der Oberseite (9.3) der Basis (9) angebracht sind und nebeneinander angeordnet und parallel zur zweiten Verschiebungsachse (Y) angeordnet sind; und wobei der zweite Schlitten (25) über dem ersten Schlitten (23) angeordnet ist, wobei der erste Schlitten (23) zwischen der Oberseite (9.3) der Basis und dem zweiten Schlitten (25) positioniert ist.

7. Drehmaschine (1) nach einem oder mehreren der Ansprüche 1 bis 5, wobei die Führungen (21) des ersten Führungssystems (20) an einer Seitenfläche (9.4) der Basis (9), parallel zur ersten Verschiebungsrichtung (X) und auf der dem Spindelstock (13) und dem Reitstock (15) gegenüberliegenden Seite der Basis (9) angeordnet sind.

8. Die Drehmaschine (1) nach Anspruch 6 oder 7, wobei der erste Schlitten (23) und der zweite Schlitten (25) mittels des zweiten Führungssystems (26) direkt aneinander befestigt sind; wobei das zweite Führungssystem (26) Führungen (27) und Gleitschuhe (29), die gleitend miteinander in Eingriff stehen; und wobei die Führungen (27) des zweiten Führungssystems (26) einstückig mit dem ersten Schlitten (23) oder dem zweiten Schlitten (25) ausgebildet sind und die Führungsschuhe (29) einstückig mit dem jeweils anderen der beiden Schlitten (23) und (25) ausgebildet sind.

9. Drehmaschine (1) nach einem oder mehreren der vorstehenden Ansprüche, wobei: die erste Verschiebungsachse (X) und die zweite Verschiebungsachse (Y) horizontal verlaufen; die Drehachse (C) des Spindelträgers vertikal verläuft; die Drehachsen (A) der Werkstücke (P) horizontal verlaufen und die Ebene der Drehachsen (A) der Werkstücke eine vertikale Ebene ist.

10. Drehmaschine (1) nach einem oder mehreren der vorstehenden Ansprüche, wobei der zweite Schlitten (25) die Form eines beweglichen Ständers hat, der sich vertikal über den ersten Schlitten (23) erstreckt.

11. Drehmaschine (1) nach einem oder mehreren der vorstehenden Ansprüche, wobei die Basis (9) eine Fläche aufweist, entlang der der erste Schlitten (23) und der zweite Schlitten (25) gleiten, die in einer höheren Höhe (hl) im Verhältnis zu einer Mindesthöhe (h4) positioniert sind, die von einem unteren Ende des Führungsschlittens (43) bei der Bewegung entlang der dritten Translationsachse (Z) erreicht werden kann.

12. Drehmaschine (1) nach einem oder mehreren der vorstehenden Ansprüche, wobei das erste Führungssystem (20) auf einer Höhe (hl) angeordnet ist, die höher ist als eine Mindesthöhe (h4), die von einem unteren Ende des Führungsschlittens (43) bei der Bewegung entlang der dritten Translationsachse (Z) erreichbar ist.

13. Drehmaschine (1) nach einem oder mehreren der vorstehenden Ansprüche, wobei die Reitstöcke (15) von einem Ständer (17) getragen werden, der parallel zur ersten Verschiebungsachse (X) bewegbar ist, um den gegenseitigen Abstand zwischen den Spindelstöcken (13) und den Reitstöcken (15) einzustellen, und wobei die Spindelstöcke (13) von einem mit der Basis (9) einstückig ausgebildeten Ständer (5) getragen werden, oder umgekehrt; wobei Motoren für die Drehung der Spindelstöcke (13) vorzugsweise an dem feststehenden Ständer (5) gelagert sind; wobei der bewegliche Ständer (17) vorzugsweise geführt wird:
auf mindestens einer unteren Führung (19) parallel zur ersten Verschiebungsachse (X) oder auf mindestens einer oberen Führung (11) parallel zur ersten Translationsachse (X) oder sowohl auf einer oberen Führung (11) parallel zur ersten Achse (X) als auch auf einer unteren Führung (19) parallel zur ersten Translationsachse (X); wobei die untere Führung (19) vorzugsweise auf einer niedrigeren Höhe in Bezug auf die Oberseite (9.3) der Basis (9) angeordnet ist, auf der die Führungen (21) des ersten Führungssystems (20) angeordnet sind; und
wobei vorzugsweise der bewegliche Ständer (17) und vorzugsweise der feste Ständer (15) untere Enden aufweisen, die auf einer niedrigeren Höhe (h2) in Bezug auf die Oberseite (9.3) der Basis (9) angeordnet sind, auf der die Führungen (21) des ersten Führungssystems (20) angeordnet sind.

14. Drehmaschine (1) nach Anspruch 13, wobei: die Basis (9) umfasst: einen Hauptkörper (9.1), auf dem die Führungen (21) des ersten Führungssystems (20) befestigt sind; und ein Paar Querarme (9.21, 9.22), die parallel zueinander und orthogonal zum Hauptkörper (9.1) sowie zur zweiten Translationsachse (Y) verlaufen; der feste Ständer (5) einstückig mit einem der genannten Querarme (9.21, 9.22) ausgebildet ist; wobei sich in einer Draufsicht mindestens eine und vorzugsweise sowohl die obere Führung (11) als auch die untere Führung (19) zwischen den Querarmen (9.21, 9.22) der Basis (9) erstrecken; und wobei vorzugsweise ein Förderer (51) zum Abtransport von Spänen zwischen den beiden Querarmen (9.21, 9.22) untergebracht ist, wobei der Förderer vorzugsweise ein Saugförderer oder ein bewegliches Band ist.

15. Drehmaschine (1) nach einem oder mehreren der vorstehenden Ansprüche, umfassend ein Werkzeugmagazin (71).

16. Drehmaschine nach einem oder mehreren der vorstehenden Ansprüche, umfassend eine flexible Schutzwand (61), die den Innenraum einer die Drehmaschine enthaltenden Kabine (91) in eine ersten Raum (91.1) und einen zweiten Raum (91.2) unterteilt; wobei sich die Spindelstöcke (13) und Reitstöcke (15) sowie der Arbeitsbereich in dem zweiten Raum (91.2) befinden, in dem sich der erste Schlitten (23) befindet; wobei der zweite Schlitten (25) durch die flexible Wand hindurchläuft; und wobei vorzugsweise ein Absaugsystem (93) vorgesehen ist, um im zweiten Raum (91.2) gegenüber der Außenseite der Kabine (91) und gegenüber dem ersten Raum (91.1) einen Unterdruck zu erzeugen.

17. Drehmaschine (1) nach Anspruch 16, wobei die Schutzwand (61) einen ersten Wandabschnitt (61A) und einen zweiten Wandabschnitt (61B) umfasst, zwischen denen ein Durchgang für die Werkzeuge (U) definiert ist, wobei der erste Wandabschnitt und der zweite Wandabschnitt am ersten Schlitten (23) befestigt sind, um ein Verlängern und Verkürzen eines der genannten ersten Wandabschnitte und des zweiten Wandabschnitts sowie eine gleichzeitige Verkürzung und Verlängerung des anderen der genannten ersten Wandabschnitte und zweiten Wandabschnitte zu ermöglichen, wenn sich der erste Schlitten (23) entlang der ersten Verschiebungsachse (X) verschiebt; und wobei der zweite Schlitten durch eine zwischen dem ersten Wandabschnitt (61A) und dem zweiten Wandabschnitt (61B) angeordnete Öffnung bewegbar ist.

## Revendications

1. Un tour à commande numérique multibroche (1), comprenant :
une structure porteuse de charge (3) ayant une base (9) s'étendant suivant un premier axe de déplacement (X) ;
une pluralité de têtes porte-broche (13) et de paires de contre-pointes (15) coaxiales les unes avec les autres et définissant chacune un axe de rotation respectif (A) des pièces à usiner (P) ; chaque tête porte-broche (13) étant motorisée ; la distance entre les têtes porte-broche et les contre-pointes étant réglable ; et les axes de rotation (A) étant dans un même plan et parallèles au premier axe de déplacement (X) ;
un premier chariot (23) guidé long d'un premier système de guidage (20) comprenant des guides (21) solidaires de la base (9) et s'étendant dans la direction du premier axe de déplacement (X) ; le premier chariot (23) étant animé d'un mouvement commandé numériquement le long du premier axe de déplacement (X) ;
un deuxième chariot (25), supporté par le premier chariot (23) et mobile avec un mouvement contrôlé numériquement par rapport au premier chariot (23), au moyen d'un deuxième système de guidage (26), dans la direction d'une deuxième axe de déplacement (Y), perpendiculaire au premier axe de déplacement (X) et perpendiculaire au plan contenant les axes de rotation (A) des pièces à usiner ; le deuxième chariot (25) s'étendant au-dessus d'une face supérieure (9.3) de la base ;
une pluralité de broches (31) avec des axes parallèles et alignées les unes avec les autres dans une direction perpendiculaire au premier axe de déplacement (X) et au deuxième axe de déplacement (Y) ; les broches étant aptes à faire tourner des outils (U) configurés pour usiner simultanément des pièces montées entre les têtes porte-broche (13) et les contre-pointes (15) ;
dans lequel : les broches (31) sont portées par un support rotatif (41) animé d'un mouvement de rotation autour d'un axe de rotation (C) parallèle à la direction d'alignement des broches ; le support rotatif (41) est supporté en rotation sur un coulisseau (43) fixé sur le deuxième chariot (25) et animé d'un mouvement de déplacement par rapport au deuxième chariot (25), le long d'un troisième axe de déplacement (Z) perpendiculaire au premier axe de déplacement (X) et au deuxième axe de déplacement (Y) et parallèle é l'axe de rotation (C) du support rotatif.

2. Le tour (1) selon la revendication 1, dans lequel le support rotatif (41), le coulisseau (43) et le deuxième chariot (25) sont symétriques par rapport à un plan médian (M-M) du deuxième chariot (25), le plan médian (M-M) étant parallèle au deuxième axe de déplacement (Y) et perpendiculaire au premier axe de déplacement (X).

3. Le tour (1) selon la revendication 1 ou 2, dans lequel le deuxième chariot (25) est positionné dans une position symétrique par rapport au premier chariot (23).

4. Le tour (1) selon l'une ou plusieurs des revendications précédentes, dans lequel le coulisseau (43) est en prise directe avec le deuxième chariot (25) au moyen d'un troisième système de guidage (45) interposé entre le coulisseau (43) et le deuxième chariot (25).

5. Le tour (1) selon l'une ou plusieurs des revendications précédentes, dans lequel le coulisseau (43) est en prise avec une face du deuxième chariot (25) tournée vers les axes de rotation (A) des pièces à usiner (P) ; le coulisseau (43) étant de préférence en prise avec la face du deuxième chariot (25) dans une position sensiblement symétrique par rapport à ladite face.

6. Le tour (1) selon l'une ou plusieurs des revendications précédentes, dans lequel les guides (21) du premier système de guidage (20) sont appliquées sur la face supérieure (9.3) de la base (9) et sont placés côte à côte et espacées parallèlement au deuxième axe de déplacement (Y) ; et dans lequel le deuxième chariot (25) est superposé sur le premier chariot (23), le premier chariot (23) étant positionné entre la face supérieure (9.3) de la base et le deuxième chariot (25).

7. Le tour (1) selon l'une ou plusieurs des revendications 1 à 5, dans lequel les guides (21) du premier système de guidage (20) sont appliqués sur une face latérale (9.4) de la base (9), parallèle à la première direction de déplacement (X) et placés sur le côté de la base (9) opposé aux têtes porte-broche (13) et aux contre-pointes (15).

8. Le tour (1) selon la revendication 6 ou 7, dans lequel le premier chariot (23) et le deuxième chariot (25) sont fixés l'un à l'autre au moyen du deuxième système de guidage (26) ; le deuxième système de guidage (26) comprenant des guides (27) et des patins (29) en prise les uns avec les autres de manière coulissante ; et les guides (27) du deuxième système de guidage (26) sont solidaires avec l'un desdits premier chariot (23) et deuxième chariot (25) et les patins (29) sont solidaires avec l'autre desdites premier chariot (23) et deuxième chariot (25).

9. Le tour (1) selon l'une ou plusieurs des revendications précédentes, dans lequel : le premier axe de déplacement (X) et le deuxième axe de déplacement (Y) sont horizontaux ; l'axe de rotation (C) du support de broche est vertical ; les axes de rotation (A) des pièces à usiner (P) sont horizontaux et le plan contenant les axes de rotation (A) des pièces à usiner est un plan vertical.

10. Le tour (1) selon l'une ou plusieurs des revendications précédentes, dans lequel le deuxième chariot (25) a la forme d'un montant mobile s'étendant verticalement au-dessus du premier chariot (23).

11. Le tour (1) selon l'une ou plusieurs des revendications précédentes, dans lequel la base (9) a une face le long de laquelle le premier chariot (23) et le deuxième chariot (25) coulissent, positionnée à une hauteur (h1) supérieure à une hauteur minimale (h4) atteignable depuis une extrémité inférieure du coulisseau (43) lors du mouvement le long du troisième axe de déplacement (Z).

12. Le tour (1) selon l'une ou plusieurs des revendications précédentes, dans lequel le premier système de guidage (20) est positionné à une hauteur (h1) supérieure à une hauteur minimale (h4) atteignable depuis une extrémité inférieure du coulisseau (43) lors du mouvement le long du troisième axe de déplacement (Z).

13. Le tour (1) selon l'une ou plusieurs des revendications précédentes, dans lequel les contre-pointes (15) sont supportées par un montant (17) mobile parallèlement au premier axe de déplacement (X) pour régler la distance mutuelle entre les têtes porte-broche (13) et les contre-pointes (15) et dans lequel les têtes porte-broche (13) sont supportées par un montant (5) solidaire de la base (9) ou vice-versa ; les moteurs pour la rotation des têtes porte-broche (13) étant de préférence supportés par le montant fixe (5) ; le montant mobile (17) étant de préférence guidé sur au moins un guide inférieur (19) parallèle au premier axe de déplacement (X), ou sur au moins un guide supérieur (11) parallèle au premier axe de déplacement (X) ou à la fois sur un guide supérieur (11) parallèle au premier axe de déplacement (X) et un guide inférieur (19) parallèle au premier axe de déplacement (X) ; le guide inférieur (19) étant de préférence placé à une hauteur inférieure par rapport à la face supérieure (9.3) de la base (9) sur laquelle les guides (21) du premier système de guidage (20) sont placés ; et de préférence le montant mobile (17) ainsi que de préférence le montant fixe (15) ayant des extrémités inférieures placées à une hauteur (h2) inférieure par rapport à la face supérieure (9.3) de la base (9) sur laquelle les guides (21) du premier système de guidage (20) sont placés.

14. Le tour (1) selon la revendication 13, dans lequel :
la base (9) comprend : un corps principal (9.1) sur lequel les guides (21) du premier système de guidage (20) sont fixés ; et une paire de bras transversaux (9.21, 9.22), parallèles les uns aux autres et perpendiculaires au corps principal (9.1) et au deuxième axe de déplacement (Y) ;
le montant fixe (5) est solidaire de l'un desdits bras transversaux (9.21, 9.22) ;
en une vue de dessus, au moins l'un et de préférence les deux dits guide supérieur (11) et guide inférieur (19) s'étendent entre les bras transversaux (9.21, 9.22) de la base (9) ; et
dans lequel un convoyeur (51) pour le retrait des copeaux est logé entre les deux bras (9.21, 9.22), ledit convoyeur étant de préférence un convoyeur à succion et un convoyeur à bande transporteuse.

15. Le tour (1) selon l'une ou plusieurs des revendications précédentes, comprenant un magasin de porte-outils (71).

16. Le tour (1) selon l'une ou plusieurs des revendications précédentes, comprenant une paroi de protection flexible (61) qui divise l'intérieur d'une cabine (91) contenant le tour dans un premier volume (91.1) et un deuxième volume (91.2) ; les têtes porte-broche (13) et les contre-pointe (15) et la zone de travail étant situés dans le deuxième volume (91.2) dans lequel le premier chariot (23) est situé ; le deuxième chariot (25) passant à travers la paroi flexible ; et un système de succion (93) étant de préférence configuré pour créer un vide dans le deuxième volume (91.2) par rapport à l'extérieur de la cabine (91) et par rapport au premier volume (91.1).

17. Le tour (1) selon la revendication 16, dans lequel la paroi de protection (61) comprend une première partie de paroi (61A) et une deuxième partie de paroi (61B), entre lesquelles un passage pour les outils (U) est formé, la première partie de paroi et la deuxième partie de paroi étant fixés au premier chariot (23) pour permettre un allongement et un raccourcissement de l'une desdites première partie de paroi et deuxième partie de paroi et un raccourcissement et un allongement simultanés de l'autre desdites première partie de paroi et deuxième partie de paroi, lorsque le premier chariot (23) se déplace le long du premier axe de déplacement (X) ; et dans lequel le deuxième chariot est mobile à travers une ouverture agencée entre la première partie de paroi (61A) et la deuxième partie de paroi (61B).
